# EUROPEAN PATENT APPLICATION

(11) **EP 1 700 687 A1**
(43) Date of publication of application: **13.09.2006**
(21) Application number: 05425142.6
(22) Date of filing: 11.03.2005
(51) Int. Cl.: B32B 5/24, B32B 9/06, B32B 27/04

(54) **Composite material resistant to perforation, process for its preparation and corresponding products**

(71) Applicant: Frati Laminati S.r.l., 27025 Belcreda di Gambolo' (PV) (IT)
(72) Inventor: Frati, Maria Giovanna, 46019 Viadana (MN) (IT)
(74) Representative: Gislon, Gabriele

(57) **Abstract**

The present invention concerns a composite material for protection against perforation, in particular a laminate having anti-perforation characteristics, a process for the production thereof and the related products obtained such as panels, inserts for shoe soles and other perforation resistant products.

## Description

The present invention concerns a composite material for protection against perforations, a process for their production and the related products thus obtained. In particular, the invention concerns a laminate having antiperforation characteristics, its production and the products such as panels, shoe sole inserts and other products perforation resistant.

Various types of materials used for the above purpose are known. For example, metal inserts are used as protections for shoe soles; patent US-A-5237758 describes a wire net insert for use in the soles of safety shoes.

Perforation resistant composite materials are described, for example, in US-A-5614305, which refers to the publication Composites Science and Technology, 1990, Vol. 38. US-A-5614305 describes composite materials consisting of layers of carbon or graphite fibre laminated with thermosetting polymer matrixes: these products, however, are said to be not highly resistant, as they do not have a mechanism for dissipation of the energy beyond the yield point. To solve this problem composite materials are proposed in which SMA (shape memory alloy) fibres are used. These fibres are described as giving products with far superior characteristics to those of similar products using aramidic fibres.

The materials subject of the solution proposed in US-A-5614305 are, however, complex and particularly expensive to produce; furthermore, said materials involve the use of metals, which makes them unsuitable for certain uses and in any case poses drawbacks such as the thermal and electrical conductivity typical of metals, their considerable weight and the fact that they activate metal detectors.

It is therefore necessary to produce a material resistant to perforation which is substantially free of metal elements, inexpensive to produce and with good flexibility and mechanical characteristics suitable to provide the required resistance to perforation even with low thickness of the material. it is the aim of the present invention to solve the above discussed problems by providing a composite material resistant to perforation comprising a textile fibre layer, characterised in that said fibre layer is a layer of textile fibres chosen from aramidic fibres, PE-UHMW fibres, carbon fibres and glass fibres, and their mixtures, and in that said layer of fibres is laminated between at least two layers of paper impregnated with phenolic resin. Preferably the fibres are aramidic fibres and are in the form of a weft and warp (i.e. woven) or knitted fabric.

According to an embodiment of the invention, there are two or more layers of textile fibre, preferably aramidic fibers, alternating with sheets of kraft paper plus phenolic resin.

According to a further embodiment of the invention, outer decorative layers are also present.

The material according to the invention has several advantages with respect to the materials according to the known technique. Firstly, in its basic form, it is a material without any metal elements such as fibres, inserts and similar, consequently it is a thermal and electrical insulator. Furthermore, the material is extremely lightweight and has a good level of flexibility without giving rise to de-lamination. A further advantage is the fact that the panels of material can be easily cut, by die cutting for example, to obtain the required products.

As mentioned above, one use of the material according to the invention is for safety shoe insoles or insert for soles, where it can replace known metal soles inserts. These soles inserts or insoles are therefore a subject of the present invention. The laminate panels produced with the material claimed, which require further processing to obtain the end product, are also considered as falling within the scope of the invention. Examples of end product are, in addition to the above-mentioned insoles for shoes, elements for protective clothing such as bullet-proof vests and similar, furnishing panels, panels for doors, panels for motor vehicle interiors and fittings and other means of locomotion, for example buses and trains, and protective elements in general. Other examples of end products are, for example, sports protection accessories for the body such as knee pads, elbow pads and shin pads, protective elements included in sports clothing such as fencing suits or other sportswear.

Other examples of end products are items of clothing such as uniforms, hats, jackets, tracksuits, trousers or gloves.

The invention also comprises a process for production of the material described above, said process involving lamination of the above-mentioned textile fibres with at least two layers of kraft paper and phenolic resin according to the method normally used for the production of plastic laminates.

The invention will now be described in further detail with reference to the drawings attached for illustrative non-limiting purposes, where:
- figures 1 a and 1 b are schematic views, respectively in section (fig.1 a) and exploded (fig.1 b), of a composite material according to the invention; and
- figures 2a and 2b are views analogous to those of fig. 1 a and 1 b of a further embodiment of the invention.

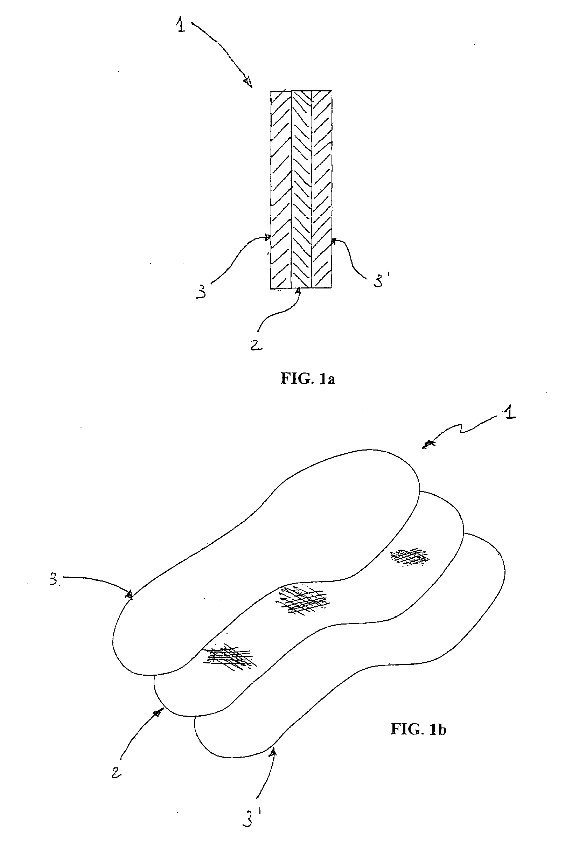

With reference to figure 1, the material according to the invention comprises a layer 2 of fabric in aramidic fibres, such as Kevlar® and mixtures of Kevlar®, Nomex® and Twaron® and their mixtures, bonded on both sides with two layers 3 and 3' of paper impregnated with phenolic resin of the type normally used for the production of plastic laminates. The paper used is preferably Kraft paper with a gram weight of between 80 and 200 g/m².

The aramidic fabric is preferably woven (weft and warp) or knitted with a gram weight of between 60 and 450g/m2.

According to a further embodiment of the invention, polyethylene fibres with ultra-high molecular weight (PE-UHMW = Ultra-High Molecular Weight Polyethylene), carbon fibres, glass fibres and their mixtures are used instead of the aramidic fibres.

Fabric 2 and outer layers 3 and 3' are bonded according to the techniques normally used in the production of plastic laminates. More specifically, the preferred technique exploits the action of a heated press which exerts a pressure of between 40 kg/cm² and 150 kg/cm², preferably a pressure equal to approximately 80 kg/cm². The temperature at which bonding is performed can be set within the range of 100°C to 200°C according to the characteristics of the products to be bonded. For example, in the described embodiment having a fabric consisting of aramidic fibres, the bonding temperature is approximately 160°C.

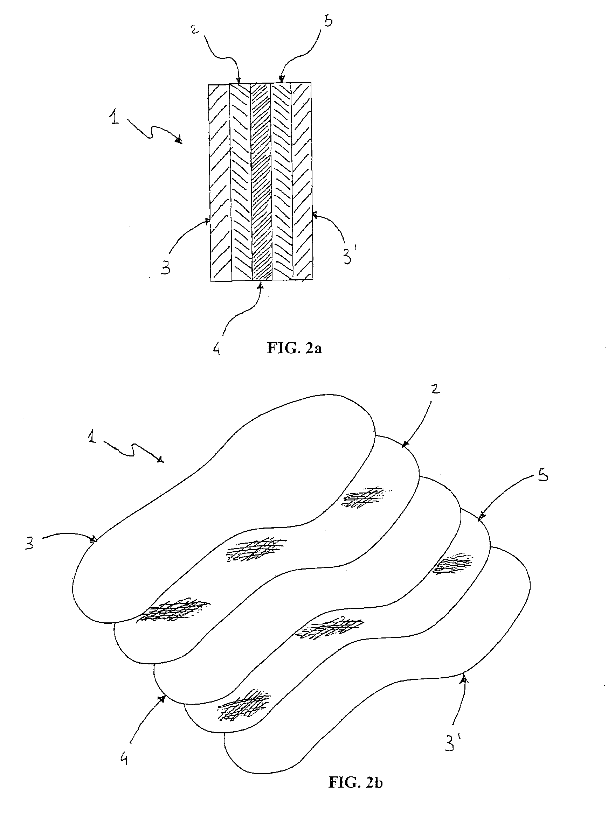

Fig. 2 refers to a further embodiment of the invention, in which there are two outer layers of kraft paper 3 and 3' and two inner layers, 2 and 5, of aramidic fabric; between layers 2 and 5 there is a layer 4 of paper and phenolic resin. This embodiment provides very high resistance to perforation and is preferable to the use of one single layer 2 of fabric with a high gram weight.

The use of the outer layers 3 and 3' permits immobilisation of the textile fibres thus enhancing their resistance to perforation; the results obtained are particularly surprising, in particular when taking into account the paper composition of the layers 3 and 3'.

## Claims

1. A composite material (1) resistant to perforation, comprising a layer of textile fibres, **characterised in that** said layer of fibres (2) is a layer of fibres chosen from aramidic fibres, PE-UHMW fibres, carbon fibres and glass fibres and mixtures thereof, and **in that** said layer of aramidic fibres is laminated between at least two layers of paper (3,3') impregnated with phenolic resin.

2. A composite material (1) according to claim 1, **characterised in that** said fibres are in the form of fabric chosen from woven or knitted fabric.

3. A composite material according to claim 1 or 2, **characterised in that** two or more layers of fabric (2, 5) are present in fibres alternating with sheets (3,3',4) of kraft paper and phenolic resin.

4. A composite material (1) according to one of the previous claims, further comprising at least one outer decorative layer.

5. A composite material (1) according to one of the previous claims, wherein said fibres are aramidic fibres.

6. A composite material (1) according to claim 5, wherein said aramidic fibre fabric has a gram weight within the range of 60 to 450 g/m².

7. A sole insert for protective shoes, **characterised in that** it comprises a layer of composite material (1) according to any previous claim.

8. A protective panel, **characterised in that** it comprises a layer of composite material (1) as claimed in one of the previous claims.

9. A trim panel for cars, buses or trains, **characterised in that** it comprises a layer of composite material (1) as claimed in one of the previous claims.

10. A protective panel for doors, **characterised in that** it comprises a layer of composite material (1) as claimed in one of the previous claims.

11. A bullet-proof vest, **characterised in that** it comprises a layer of composite material (1) as claimed in one of the previous claims.

12. Protective sports accessories for the body **characterised in that** they comprise a layer of composite material (1) as claimed in one of the previous claims.

13. Items of clothing such as uniforms, hats, jackets, tracksuits, trousers or gloves **characterised in that** they comprise a layer of composite material (1) as claimed in one of the previous claims.
